# EUROPEAN PATENT SPECIFICATION

(11) **EP 2 995 186 B1**
(45) Date of publication and mention of the grant of the patent: **28.03.2018**
(21) Application number: 15182493.5
(22) Date of filing: 26.08.2015
(51) Int. Cl.: A01D 34/90

(54) **BACKPACK TYPE WORKING MACHINE**
RUCKSACKARTIGE ARBEITSMASCHINE
MACHINE DE TRAVAIL DE TYPE SAC À DOS

(30) Priority: 11.09.2014 JP 2014185641; 11.09.2014 JP 2014185642
(43) Date of publication of application: 16.03.2016
(73) Proprietor: Yamabiko Corporation, Ohme-shi, Tokyo 198-8760 (JP)
(72) Inventor: YAMAMOTO, Takayuki, Tokyo (JP); ITO, Tomoki, Tokyo (JP)
(74) Representative: Rentsch Partner AG

(56) References cited:
- JP-A- S 544 722
- JP-A- 2004 076 611
- JP-A- 2014 161 269
- US-A- 2 519 936
- US-A1- 2010 000 097

## Description

### TECHNICAL FIELD

The present invention relates to a backpack type working machine in which a motor such as engine or an electric motor is installed in a frame for backpack.

### RELATED ART

A backpack type working machine has a configuration in which a motor such as an engine used as a power source is installed in a frame for backpack, a working part is provided in a front end part of an operation rod held by a hand of a worker during a work, and power is transmitted from the motor to the working part through a flexible shaft. As an example of such a backpack type working machine, a brush cutter for a work such as mowing, pruning, and cutting is exemplified. The brush cutter includes a working part which is provided in a front end part of an operation rod so as to rotationally drive a working tool such as a mowing blade or a resin string.

In such a backpack type working machine, the flexible shaft is bent in a U-shape in order to transmit power from the motor located at the back of the worker to the working part of the operation rod located at the hand of the worker. At this time, the worker conducts a work while holding the operation rod against the repelling force of the bent flexible shaft, and the repelling force applied to the worker changes in accordance with a change in the bent state of the flexible shaft. As a result, satisfactory workability cannot be obtained. In order to solve this problem, in the related-art, a configuration is proposed in which a motor such as an engine includes a power shaft directed to the horizontal direction and rotating about a vertical shaft provided in a frame for backpack, and the motor is rotated about the vertical shaft by a working motion of swinging an operation rod in all directions in order to restrain a change in the bent state of a flexible shaft (see Patent Literature 1 below).

### RELATED ART LITERATURE

### Patent Literature

Patent Literature 1
Japanese Patent Application Laid-open No.S54-4722

### SUMMARY OF THE INVENTION

When grass cutting work is performed by such a backpack type working machine, the working face is substantially horizontal, and the worker conducts the work in a standing state. In this case, the worker swings the working part along the working face in all directions while the operation rod is tilted with respect to the working face. At this time, in the backpack type working machine of the related art, the output shaft of the motor is disposed substantially horizontally, and power is transmitted from the output shaft to the flexible shaft, then, a reaction force is generated by the motion of swinging the operation rod in all directions while the operation rod is held in a tilted state with respect to the substantially horizontal working face.
The reaction force is obliquely applied to the output shaft of the motor, and hence the output shaft of the motor is swayed up and down. Accordingly, the backpacked motor is swayed unstably, and hence a problem arises in that the worker gets an unpleasant backpacking feeling.

Further, according to the above-described related art, since the engine having relatively heavy weight rotates about the vertical shaft in the frame for backpack every working motion of swinging the operation rod in all directions and the engine is axially supported by the frame, the vibration of the engine is easily transmitted to the frame through the shaft. As a result, a problem arises in that the worker inevitably conducts a work with an uncomfortable feeling caused by the rotation of the engine or an unpleasant feeling caused by the vibration of the engine.

Further, in order to allow the engine to be rotatable about the vertical shaft of the frame for backpack, a space capable of preventing the contact of the engine in a rotation state needs to be ensured between the frame facing the back of the worker and the engine. For this reason, the gravity center of the engine is inevitably separated from the back of the worker when the worker backpacks the frame. As a result, a problem arises in that the backpacking load of the worker increases.

Further, the engine which rotates with every working motion of swinging the operation rod is axially supported so as to rotate about the vertical shaft (vertical axis) provided in the frame for backpack. However, since the worker normally conducts a work by tilting the operation rod with respect to the vertical direction, a part of the bent resistance of the flexible shaft bent in accordance with the tilt angle of the operation rod is applied in a direction along the vertical shaft, and hence the frame is swayed up and down through the vertical shaft by the working motion of swinging the operation rod in all directions. As a result, a problem arises in that the worker gets an unpleasant backpacking feeling.

Further, in the backpack type working machine of the related art, since the engine or the engine unit rotates about the vertical shaft of the frame, the exhaust gas blowing direction or the engine cooling air direction changes with the rotation of the engine or the engine unit. Accordingly, there is a need to provide a countermeasure component in order to prevent these directions from being directed to the worker.

The invention is contrived to solve such problems. That is, an object of the invention is to allow a worker to conduct a work without an unpleasant backpacking feeling when the worker holds an operation rod while the operation rod is tilted with respect to a working face in a backpack type working machine in which a motor is installed in a frame for backpack, a working part is provided in a front end part of the operation rod held by the hand of the worker during the work, and power is transmitted from the motor to the working part through a flexible shaft.

Further, in a case where an engine is used as the motor, an object of the invention is to solve an uncomfortable feeling caused when the engine rotates with a working motion of swinging an operation rod or an unpleasant feeling caused when the vibration of the engine is transmitted to the worker, to reduce a backpacking load of the worker, to solve an unpleasant backpacking feeling caused when a frame moves up and down by the working motion of swinging the operation rod, and to keep an exhaust gas blowing direction or an engine cooling air direction in an appropriate direction not disturbing the work of the worker in a backpack type working machine in which an engine is installed in a frame for backpack, a working part is provided in a front end part of the operation rod held by the hand of the worker during the work, and power is transmitted from the engine to the working part through a flexible shaft.

In order to achieve such an object, the backpack type working machine according to the invention has the following configuration.

Provided is a backpack type working machine in which a motor is installed in a frame for backpack and power of the motor is transmitted to a working part provided in a front end part of an operation rod through a flexible shaft, wherein a base end part of the flexible shaft is joined to an output shaft of the motor and is rotatable about this output shaft, wherein the output shaft of the motor is tilted by an angle θ with respect to a vertical reference direction of the frame, which direction is vertical to a horizontal plane while the frame is normally backpacked on a horizontal plane with a vertical frame part of the frame also oriented vertically, and wherein the angle θ is between 5° and 60°.

The motor of the backpack type working machine may be an engine, wherein a power shaft of the engine is preferably directed in the up and down direction, a base end part of the flexible shaft is rotatable about a power shaft and is joined to the power shaft, and the engine is statically attached to the frame.

### BRIEF DESCRIPTION OF THE DRAWINGS

Fig. 1 is a diagram illustrating an entire configuration of a backpack type working machine according to an embodiment of the invention.
Fig. 2 is a diagram (a partially cross-sectional view) illustrating a part (a frame and a motor) of the backpack type working machine according to the embodiment of the invention.
Fig. 3 is a diagram illustrating an entire configuration of the backpack type working machine according to the embodiment of the invention.
Fig. 4 is a diagram (a partially cross-sectional view) illustrating a part (a frame and an engine) of the backpack type working machine according to the embodiment of the invention.

### DETAILED DESCRIPTION OF THE EMBODIMENTS

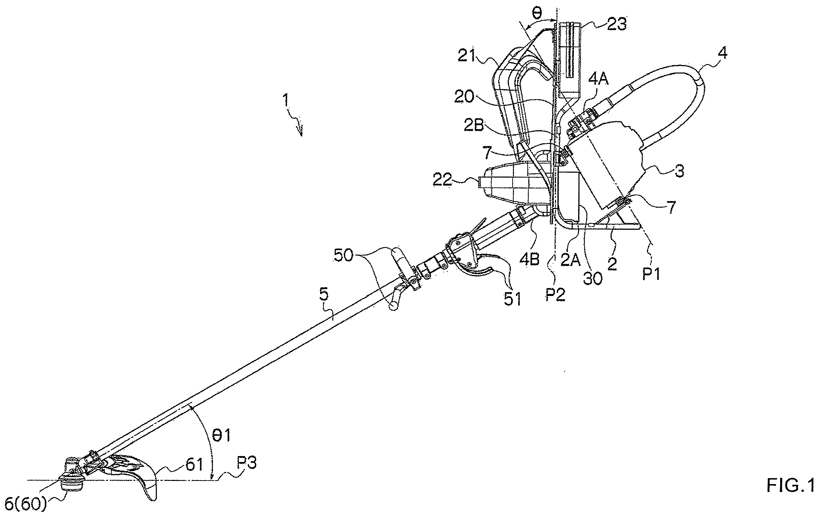

Hereinafter, embodiments of the invention will be described with reference to the drawings. Fig. 1 is a diagram illustrating an entire configuration of a backpack type working machine according to an embodiment of the invention. A backpack type working machine 1 includes a frame 2 for backpack, a motor 3 installed in the frame 2, a flexible shaft 4, an operation rod 5, and a working part 6. In such a backpack type working machine 1, power of the motor 3 is transmitted to the working part 6 provided in the front end part of the operation rod 5 through the flexible shaft 4, a base end part 4A of the flexible shaft 4 is joined to the output shaft of the motor 3, and a front end part 4B of the flexible shaft 4 is joined to a power transmission unit provided inside the operation rod 5. Further, the output shaft to be described herein includes a crank shaft when the motor 3 is an engine, a rotor shaft when the motor 3 is an electric motor, and a shaft to which power is transmitted from these shafts.

In the backpack type working machine 1 according to the embodiment of the invention, the base end part 4A of the flexible shaft 4 is rotatable about the output shaft of the motor 3 and is joined to the output shaft of the motor 3. Then, a face which is formed by the rotation of the base end part 4A of the flexible shaft 4 is tilted with respect to the working face of the working part 6. In this way, since the base end part 4A of the flexible shaft 4 is rotatable within the face tilted with respect to the working face, the base end part 4A of the flexible shaft 4 is rotated within a constant face in response to the working motion when a worker conducts a working motion of swinging the operation rod 5 in all directions while holding the operation rod 5 so as to be tilted with respect to the working face, and hence the work can be conducted without swaying the motor 3 itself or the output shaft of the motor 3. Accordingly, the worker can conduct a work with a stable backpacking feeling.

It is desirable that the face formed by the rotation of the base end part 4A of the flexible shaft 4 be constant along the working posture of the operation rod 5. Accordingly, the bending reaction force of the flexible shaft 4 caused by the working motion of swinging the operation rod 5 is absorbed by the rotation of the base end part 4A within a constant face, and hence the sway of the output shaft of the motor 3 itself or the sway of the motor 3 can be suppressed.

When the output shaft of the motor 3 joined to the base end part 4A of the flexible shaft 4 is tilted with respect to the shaft orthogonal to the working face, the rotating face of the base end part 4A of the flexible shaft 4 is tilted with respect to the working face. At this time, the tilt angle (the tilt angle with respect to the shaft orthogonal to the working face) θ of the output shaft satisfies the relation of θ = θ1 ± 20° when the angle formed between the operation rod 5 and the working face is indicated by θ1. When the working face is set as a horizontal plane, the angle θ1 formed between the operation rod 5 and the working face is set to 25° to 40°.

In the example illustrated in the drawings, the base end part 4A of the flexible shaft 4 is rotatable about the output shaft and is joined to the output shaft, and the base end part 4A of the flexible shaft 4 is orthogonally joined to the output shaft. Since the base end part 4A of the flexible shaft 4 is rotatable about the output shaft and is joined to the output shaft in this way, the working motion of swinging the operation rod 5 in all directions can be conducted without greatly changing the bent state of the flexible shaft 4 even when the motor 3 is fixed to the frame 2. Further, since the base end part 4A of the flexible shaft 4 is orthogonally joined to the output shaft, the sway of the output shaft caused by the reaction force of the bent flexible shaft 4 can be suppressed.

It is desirable that the joint position between the base end part 4A of the flexible shaft 4 and the output shaft be above the gravity center of the motor 3. Further, it is desirable that the joint position be located above the gravity center of the motor 3 or located near the worker in relation to the gravity center. Since the joint position between the base end part 4A of the flexible shaft 4 and the output shaft is set in this way, the position of the force applied to the output shaft or the motor 3 during the work can be set near the worker, and hence an increase in the backpacking load with the working motion can be restrained.

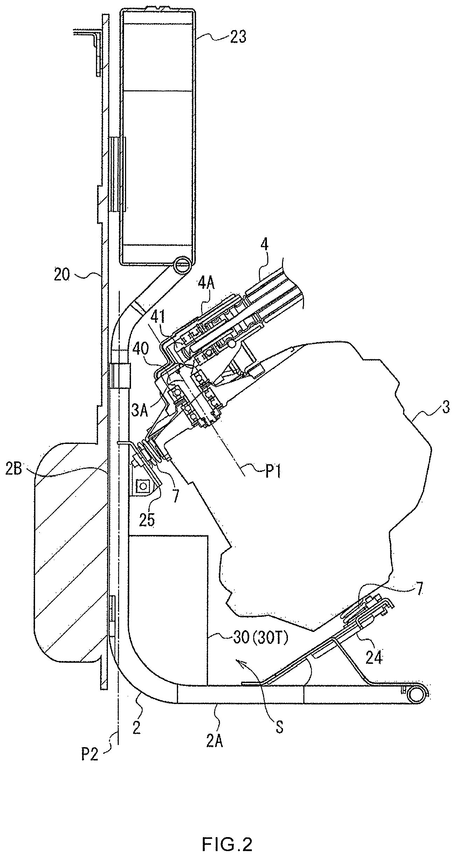

Hereinafter, an embodiment of the invention illustrated in Figs. 1 and 2 will be described in detail. The backpack type working machine 1 illustrated in the drawings has a configuration in which the motor 3 is statically attached to the frame 2 in order that the output shaft joined to the base end part 4A of the flexible shaft 4 is tilted upward and the base end part 4A of the flexible shaft 4 is rotatable about the output shaft and is joined to the output shaft. Since the motor 3 is statically attached to the frame 2 in this way, it is possible to solve an uncomfortable feeling caused when the motor rotates with the working motion of swinging the operation rod 5 or an unpleasant feeling caused when the sway of the motor is transmitted to the worker. Further, since the motor 3 can be closely attached to the frame 2, the backpacking load of the worker can be reduced. Further, since the output shaft joined to the base end part 4A of the flexible shaft 4 is tilted as described above, it is possible to solve an unpleasant backpacking feeling caused when the frame moves up and down by the working motion of swinging the operation rod 5.

In the example illustrated in the drawings, the frame 2 includes a horizontal frame 2A and a vertical frame 2B which are orthogonal to each other, and a pad 20 used for the worker to backpack the frame 2 or a backpack belt 21 or a body belt 22 is attached to the vertical frame 2B. Further, in the example illustrated in the drawings, a tool accommodation bag 23 is provided at the upper part of the vertical frame 2B.

The motor 3 is, for example, a battery driven electric motor or an engine having a power shaft, and the base end part 4A of the flexible shaft 4 is joined to the power shaft or an output shaft joined to the power shaft by a gear train. The operation rod 5 is provided with a handle 50 to be held by the hand of the worker for conducting the work, and is further provided with an operation lever 51 used to operate and stop the motor 3 and to adjust the output of the motor 3.

When the backpack type working machine 1 is used as a brush cutter, the working part 6 includes a rotation body 60 which is rotated by power transmitted from the motor 3, and a mowing blade or a resin string (nylon cord) is attached to the rotation body 60. The configuration of the working part 6 is not limited thereto, and the working part may include an operation body which is moved in a reciprocating manner by power transmitted from the motor 3. A safety cover 61 is provided at the front side of the working part 6.

In the example illustrated in the drawings, the motor 3 is statically attached to the frame 2. The static installation herein includes an installation state where the motor 3 is fixed to the frame 2 or a certain degree of motion is allowed. That is, the static installation indicates a state where a large motion such as a rotation about the shaft does not occur. In the example illustrated in the drawings, the motor 3 is attached to the frame 2 through a vibration damper (a suspension member) 7.

The motor 3 is statically attached to the frame 2 in order that the output shaft joined to the base end part 4A of the flexible shaft 4 is directed upward. As described above, the output shaft joined to the base end part 4A of the flexible shaft 4 may be the power shaft of the motor 3 or may be a shaft joined to the power shaft by a gear train. In the example illustrated in the drawings, the base end part 4A of the flexible shaft 4 is rotatable about the output shaft and is joined to the output shaft within the face along the working posture of the operation rod 5.

The base end part 4A of the flexible shaft 4 is joined to the output shaft in order that the base end part 4A rotates about the shaft direction P1 along the output shaft, and the base end part 4A rotates within the face orthogonal to the shaft direction P1. When the shaft direction P1 is tilted by the angle θ with respect to the direction P2 orthogonal to the working face, the face (the face orthogonal to the shaft direction P1), in which the base end part 4A rotates, is tilted with respect to the working face. Here, the direction P2 orthogonal to the working face indicates a direction orthogonal to the axis P3 along the working face. When the working face is a horizontal plane, the direction P2 indicates a direction along the vertical frame 2B and a vertical direction while the worker normally backpacks the frame 2.

In this example, since the motor 3 is statically attached to the frame 2, it is possible to solve an unpleasant feeling caused when the motor sways or an uncomfortable feeling caused when the motor rotates together with every working motion of swinging the operation rod 5 in all directions. Since the motor 3 is attached to the frame 2 through the vibration damper 7, it is possible to further remove an unpleasant feeling caused by the vibration of the motor 3.

Then, since the base end part 4A of the flexible shaft 4 is joined to the output shaft directed upward and the shaft direction of the base end part is rotatable about the shaft direction PI, it is possible to restrain a change in the bent state of the flexible shaft 4 with the working motion of swinging the operation rod 5 in all directions by the use of the base end part 4A rotating about the shaft direction P1. Accordingly, it is possible to conduct the working motion of swinging the operation rod 5 in all directions without greatly changing the repelling force of the bent flexible shaft 4 even when the motor 3 is statically attached to the frame 2.

Further, since the base end part 4A of the flexible shaft 4 rotates within the face along the working posture of the operation rod 5, it is possible to stably restrain a change in the bent state of the flexible shaft 4 with the working motion of swinging the operation rod 5 in all directions by the rotation of the base end part 4A. Accordingly, it is possible to obtain comfortable workability without any unpleasant backpacking feeling caused when the frame 2 moves up and down due to the working motion of the operation rod 5.

In the example illustrated in the drawings, the tilt angle θ of the shaft direction P1 of the output shaft with respect to the axis direction P2 satisfies a relation of θ = θ1 when an angle formed between the operation rod 5 and the axis P3 along the working face of the working part 6 (the rotation body 60) is indicated by θ1. Since the tilt angle θ is set in this way, the posture direction of the operation rod 5 can be substantially orthogonal to the shaft direction P1 by the working posture in which the axis P3 along the working face is along a ground face. Accordingly, since the working motion of swinging the operation rod 5 in all directions is conducted within the face substantially orthogonal to the shaft direction P1, it is possible to more stably restrain a change in the bent state of the flexible shaft 4.

Fig. 2 illustrates an example of the motor 3 installed in the frame 2 (the same numerals and signs will be given to the same components as Fig. 1, and the repetitive description thereof will not be presented). In the example illustrated in the drawings, the motor 3 is attached to the frame 2 in a tilted state, and the power shaft 3A of the motor 3 is tilted along the shaft direction P1 in the up direction. Since the motor 3 is attached in a tilted state, brackets 24 and 25 having orthogonal installation faces are respectively attached to the horizontal frame 2A and the vertical frame 2B, and the motor 3 is attached to the installation face through the vibration damper 7. The base end part 4A of the flexible shaft 4 is joined to the power shaft 3A of the motor 3 through a pair of bevel gears 40 and 41. Accordingly, the base end part 4A of the flexible shaft 4 is provided that the shaft direction thereof is rotatable about the shaft P1.

In this way, when the motor 3 is attached to the frame 2 in a tilted state and the power shaft 3A of the motor 3 is tilted with respect to the vertical reference axis P2 of the frame 2, a triangular vacant space S is formed between the motor 3 and the frame 2. Since the vacant space S is formed at a position close to the back of the worker, the backpacking load does not greatly increases even when a heavy article is disposed at the vacant space. When the motor 3 is a battery driven electric motor, a battery 30 as a heavy article can be disposed by using the vacant space S. Further, when the motor 3 is an engine, a fuel tank 30T as a heavy article can be disposed by using the vacant space.

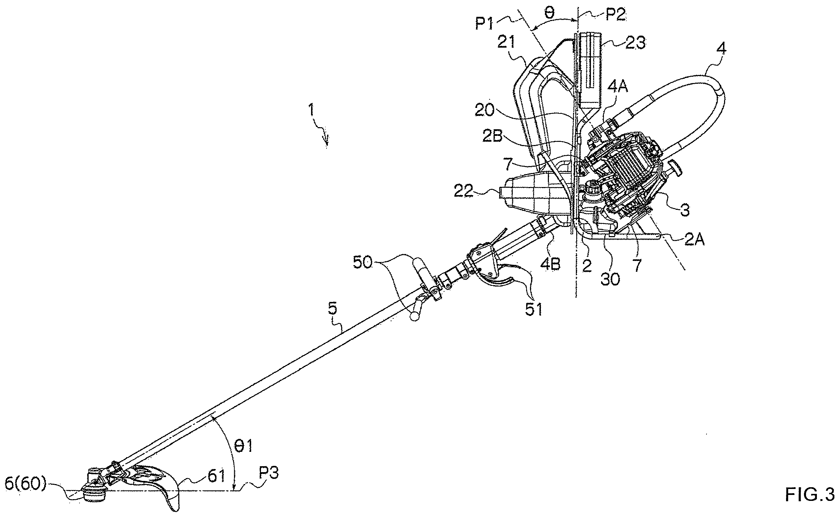

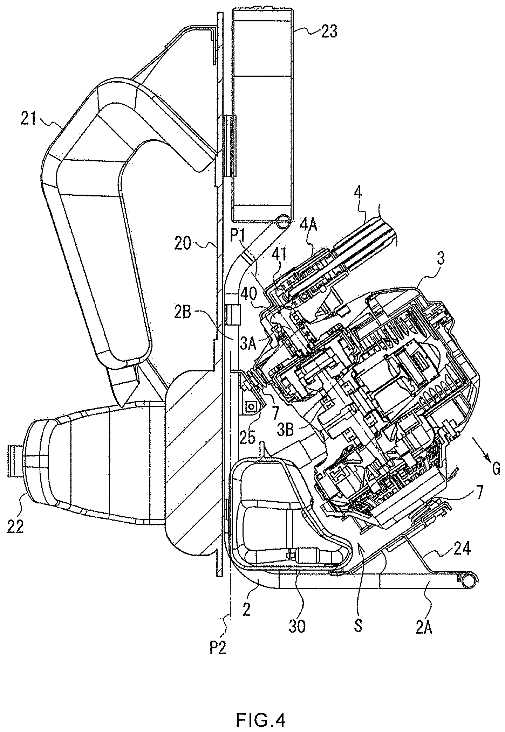

An example in which the motor 3 is an engine 3E will be described with reference to Figs. 3 and 4. The same numerals and signs will be given to the same components as the description above, and the repetitive description thereof will not be presented.

In the backpack type working machine 1, the power shaft 3A of the engine 3E (for example, an air cooling type two-cycle engine) is directed in the up and down direction, the base end part 4A of the flexible shaft 4 is rotatable about the power shaft 3A and is joined to the power shaft 3A, and the engine 3E is statically attached to the frame 2. Accordingly, since the base end part 4A of the flexible shaft 4 is rotatable about the power shaft and is joined to the power shaft 3A directed in the up and down direction, a change in the bent state of the flexible shaft 4 with the working motion of swinging the operation rod 5 can be restrained by the rotation of the base end part 4A about the power shaft 3A.

Further, since the power shaft 3A of the engine 3E is tilted with respect to the working face, the rotating face in which the base end part 4A of the flexible shaft 4 rotates with the working motion of swinging the operation rod 5 can be substantially orthogonal to the power shaft 3A. Accordingly, even when the working motion of swinging the operation rod 5 is conducted, the frame 2 does not easily move up and down, and hence the unpleasant backpacking feeling caused by the up and down movement of the frame 2 can be solved. At this time, since the rotating face of the base end part 4A of the flexible shaft 4 is disposed above the engine 3E, the engine 3E itself does not sway up and down even when the base end part 4A rotates, and the work can be conducted while keeping a comparatively stable backpacking load.

The power shaft 3A joined to the base end part 4A of the flexible shaft 4 is provided so as to be coaxial with or parallel to the crank shaft of the engine 3E, and the base end part 4A of the flexible shaft 4 is rotatable about the power shaft 3A and is joined to the power shaft 3A along the face intersecting the power shaft.

In the example illustrated in the drawings, the base end part 4A is joined to the power shaft 3A so that the shaft direction of the base end part 4A of the flexible shaft 4 rotates about the shaft direction P1 along the power shaft 3A of the engine 3E, and the shaft direction P1 is tilted forward with respect to the vertical reference direction P2 of the frame 2 so that the shaft direction of the base end part 4A is orthogonal to the shaft direction P1 of the power shaft. Here, in the example illustrated in the drawings, the vertical reference direction P2 indicates a direction along the vertical frame 2B and a direction directed to the vertical direction while the frame 2 is normally backpacked. When the working face is a horizontal plane, a direction vertical to the horizontal plane becomes the vertical reference direction P2.

According to such a backpack type working machine 1, since the engine 3E is statically attached to the frame 2, it is possible to remove an uncomfortable feeling caused when the engine or the engine unit rotates every working motion of swinging the operation rod 5 in all directions as in the related art. Further, since the engine 3E is attached to the frame 2 through the vibration damper 7, it is possible to remove an unpleasant feeling caused by the vibration of the engine 3E.

Here, the vibration direction of the vibration damper 7 interposed between the engine 3E and the frame 2 is equal to or orthogonal to the direction of the power shaft 3A. Accordingly, the vibration damper 7 can also effectively absorb the vibration caused by the rotation of the base end part 4A of the flexible shaft 4 rotating about the power shaft 3A without the vibration of the engine 3E.

Further, since the engine 3E is statically attached to the frame 2, there is no need to ensure a space capable of avoiding the contact during the rotation of the engine as in the related art, and hence the engine 3E can be attached to a position close to the back of the worker. Accordingly, the backpacking load of the worker can be reduced.

Since the face along the working posture of the operation rod 5 is parallel to or equal to the face in which the base end part 4A of the flexible shaft 4 rotates about the power shaft, it is possible to stably restrain a change in the bent state of the flexible shaft 4 with the working motion of swinging the operation rod 5 in all directions by the rotation of the base end part 4A. Accordingly, it is possible to obtain comfortable workability without any unpleasant backpacking feeling caused when the frame 2 moves up and down due to the working motion of the operation rod 5.

Fig. 4 illustrates an example of the engine 3E installed in the frame 2. In this way, since the fuel tank 30T supplying fuel to the engine 3E is disposed by using the vacant space S, it is possible to suppress the entire height of the backpack type working machine 1 comparatively as low as possible without increasing the backpacking load. At this time, since a space can be provided between the fuel tank 30T and the engine 3E, the safety can be improved in that the fuel tank 30 can be separated from the engine 3E as a heat source and a vibration source. Further, since the fuel tank 30 is separated from the engine 3E, an area that introduces cooling air for the engine 3E is enlarged. Accordingly, since the amount of cooling air increases, the engine 3E can be effectively cooled.

In the engine 3E which is attached to the frame 2 while being tilted with respect to the vertical reference axis P2 of the frame 2, the crank shaft 3B is disposed along the shaft direction P1, and a piston and a cylinder head are disposed in a direction orthogonal thereto. In the engine 3E disposed in this way, the exhaust gas blowing direction can be fixed to the downward tilted direction indicated by the arrow G while the power shaft 3A is directed to the opposite side to the direction of the exhaust gas. Similarly, the direction of the cooling air for the engine 3E can be also fixed to the downward tilted direction. Accordingly, these directions can be kept as directions not affecting the worker.

As described above, in the backpack type working machine 1, since the engine 3E is statically attached to the frame 2, it is possible to solve an uncomfortable feeling by the rotation of the engine or the engine unit with the working motion as in the related art and to reduce a vibration transmitted from the engine 3E to the frame 2 through the vibration damper 7. Further, since the engine 3E is attached to a position close to the frame 2 and the fuel tank 30 as a heavy article can be disposed by using the vacant space S formed between the frame 2 and the tilted engine 3E, the entire height of the backpack type working machine 1 can be suppressed as low as possible while reducing the backpacking load of the worker. Further, since the base end part 4A of the flexible shaft 4 is disposed so as to be rotatable within the face along the working posture of the operation rod 5, a change in the bent state of the flexible shaft 4 can be restrained stably.

Further, since the engine 3E is attached to the frame 2 in a tilted state so that the power shaft 3A is tilted forward, the direction of the exhaust gas or the cooling air for the engine 3E can be fixed obliquely downward while being separated from the worker so as not to disturb the work.

While the embodiments of the invention have been described with reference to the drawings, a detailed configuration is not limited to the embodiments, and the invention also includes a modification in design within the scope of the claims.

### EXPLANATION OF REFERENCE NUMERALS

1: backpack type working machine, 2: frame, 2A: horizontal frame, 2B: vertical frame,
3: motor, 3E: engine, 3A: power shaft, 3B: crank shaft,
4: flexible shaft, 4A: base end part, 4B: front end part,
40, 41: bevel gear,
5: operation rod, 50: handle, 51: operation lever,
6: working part, 60: rotation body, 7: vibration damper (suspension member),
20: pad, 21: backpack belt, 22: body belt,
23: tool accommodation bag, 30: battery, 30T: fuel tank

## Claims

1. A backpack type working machine (1) in which a motor (3) is installed in a frame (2) for backpack and power of the motor (3) is transmitted to a working part (6) provided in a front end part of an operation rod (5) through a flexible shaft (4),
wherein a base end part (4A) of the flexible shaft (4) is joined to an output shaft of the motor (3) and is rotatable about this output shaft, **characterised in that** the output shaft of the motor (3) is tilted by an angle θ with respect to a vertical reference direction (P2) of the frame (2), which direction is vertical to a horizontal plane while the frame (2) is normally backpacked on a horizontal plane with a vertical frame part of the frame (2) also oriented vertically, and
wherein the angle θ is between 5° and 60°.

2. The backpack type working machine according to claim 1,
wherein the face formed by the rotation of the base end part (4A) is constant along a working posture of the operation rod (5).

3. The backpack type working machine according to any one of-claims 1 to 2,
wherein the base end part (4A) is orthogonally joined to the output shaft.

4. The backpack type working machine according to any one of claims 1 to 3,
wherein a joint position between the base end part (4A) and the output shaft is above a gravity center of the motor (3).

5. The backpack type working machine according to any one of claims 1 to 3,
wherein a joint position between the base end part (4A) and the output shaft is located near a worker in relation to the gravity center.

6. The backpack type working machine according to any one of claims 1 to 5,
wherein the motor (3) is an electric motor driven by a battery (30) installed in the frame (2).

7. The backpack type working machine according to any one of claims 1 to 5,
wherein the motor (3) is an engine.

8. The backpack type working machine according to claim 1, wherein the motor is an engine (3E), and
wherein a power shaft (3A) of the engine (3E) is directed in the up and down direction, the base end part (4A) of the flexible shaft (4) is rotatable about the power shaft (3A) and is joined to the power shaft (3A), and the engine (3E) is statically attached to the frame (2).

9. The backpack type working machine according to claim 8,
wherein the power shaft (3A) is tilted with respect to the working face.

10. The backpack type working machine according to claim 8,
wherein a direction of an exhaust gas of the engine (3E) is set so as to be obliquely downward.

11. The backpack type working machine according to claim 10,
wherein the power shaft (3A) is directed to the opposite side to the direction of the exhaust gas.

12. The backpack type working machine according to any one of claims 8 to 11,
wherein a rotating face of the base end part (4A) of the flexible shaft (4) is disposed above the engine (3E).

13. The backpack type working machine according to any one of claims 8 to 12,
wherein the engine (3E) is statically attached to the frame (2) through a vibration damper (7).

14. The backpack type working machine according to claim 13,
wherein the engine (3E) is attached through a plurality of the vibration dampers (7) having different vibration absorbing directions.

15. The backpack type working machine according to any one of claims 8 to 14,
wherein a space is formed between the engine (3) and a fuel tank (30T) disposed in the frame (2).

16. The backpack type working machine according to claim 15,
wherein the fuel tank (30T) is disposed in a vacant space (S) between the frame (2) and the engine (3E) attached to the frame (2) in a tilted state.

## Patentansprüche

1. Rucksack-Arbeitsgerät (1), bei dem ein Motor (3) in einem Gestell (2) zum Tragen auf dem Rücken eingebaut ist und die Leistung des Motors (3) durch eine flexible Welle (4) zu einem Arbeitsteil (6) übertragen wird, der in einem vorderen Endteil einer Bedienungsstange (5) bereitgestellt wird,
wobei ein Basisendteil (4A) der flexiblen Welle (4) mit einer Abtriebswelle des Motors (3) verbunden ist und um diese Abtriebswelle drehbar ist,
**dadurch gekennzeichnet, dass**
die Abtriebswelle des Motors (3) um einen Winkel θ in Bezug auf eine vertikale Referenzrichtung (P2) des Gestells (2) geneigt ist, wobei die Richtung vertikal zu einer horizontalen Ebene ist, während das Gestell (2) normalerweise auf einer horizontalen Ebene auf dem Rücken getragen wird, wobei ein vertikaler Gestellteil des Gestells (2) ebenfalls vertikal ausgerichtet ist, und
wobei der Winkel θ zwischen 5° und 60° beträgt.

2. Rucksack-Arbeitsgerät nach Anspruch 1,
wobei die Fläche, die durch die Drehung des Basisendteils (4A) gebildet wird, entlang einer Arbeitsstellung der Bedienungsstange (5) konstant ist.

3. Rucksack-Arbeitsgerät nach einem der Ansprüche 1 bis 2,
wobei der Basisendteil (4A) senkrecht mit der Abtriebswelle verbunden ist.

4. Rucksack-Arbeitsgerät nach einem der Ansprüche 1 bis 3,
wobei eine Verbindungsposition zwischen dem Basisendteil (4A) und der Abtriebswelle oberhalb eines Schwerpunkts des Motors (3) liegt.

5. Rucksack-Arbeitsgerät nach einem der Ansprüche 1 bis 3,
wobei eine Verbindungsposition zwischen dem Basisendteil (4A) und der Abtriebswelle im Verhältnis zu dem Schwerpunkt nahe einem Arbeiter angeordnet ist.

6. Rucksack-Arbeitsgerät nach einem der Ansprüche 1 bis 5,
wobei der Motor (3) ein Elektromotor ist, der durch eine Batterie (30) getrieben wird, die in dem Gestell (2) eingebaut ist.

7. Rucksack-Arbeitsgerät nach einem der Ansprüche 1 bis 5,
wobei der Motor (3) ein Verbrennungsmotor ist.

8. Rucksack-Arbeitsgerät nach Anspruch 1, wobei der Motor ein Verbrennungsmotor (3E) ist und
wobei eine Antriebswelle (3A) des Verbrennungsmotors (3E) in der Aufwärts-Abwärts-Richtung gerichtet ist, der Basisendteil (4A) der flexiblen Welle (4) um die Antriebswelle (3A) drehbar ist und der Verbrennungsmotor (3E) unbeweglich an dem Gestell (2) befestigt ist.

9. Rucksack-Arbeitsgerät nach Anspruch 8,
wobei die Antriebswelle (3A) in Bezug auf die Arbeitsfläche geneigt ist.

10. Rucksack-Arbeitsgerät nach Anspruch 8,
wobei eine Richtung eines Abgases des Verbrennungsmotors (3E) so festgesetzt ist, dass sie schräg nach unten verläuft.

11. Rucksack-Arbeitsgerät nach Anspruch 10,
wobei die Antriebswelle (3A) zu der zur Richtung des Abgases entgegengesetzten Seite gerichtet ist.

12. Rucksack-Arbeitsgerät nach einem der Ansprüche 8 bis 11,
wobei eine Drehfläche des Basisendteils (4A) der flexiblen Welle (4) oberhalb des Verbrennungsmotors (3E) angeordnet ist.

13. Rucksack-Arbeitsgerät nach einem der Ansprüche 8 bis 12,
wobei der Verbrennungsmotor (3E) durch einen Schwingungsdämpfer (7) unbeweglich an dem Gestell (2) befestigt ist.

14. Rucksack-Arbeitsgerät nach Anspruch 13,
wobei der Verbrennungsmotor (3E) durch mehrere Schwingungsdämpfer (7), die unterschiedliche Schwingungsabsorptionsrichtungen haben, befestigt ist.

15. Rucksack-Arbeitsgerät nach einem der Ansprüche 8 bis 14,
wobei ein Raum zwischen dem Verbrennungsmotor (3E) und einem Kraftstofftank (30T), der in dem Gestell (2) angeordnet ist, gebildet wird.

16. Rucksack-Arbeitsgerät nach Anspruch 15,
wobei der Kraftstofftank (30T) in einem freien Raum (S) zwischen dem Gestell (2) und dem Verbrennungsmotor (3E), der in einem geneigten Zustand an dem Gestell (2) befestigt ist, angeordnet ist.

## Revendications

1. Machine de travail de type sac à dos (1) dans laquelle un moteur (3) est installé dans un châssis (2) pour sac à dos et la puissance du moteur (3) est transmise à une partie de travail (6) pourvue dans une partie d'extrémité avant d'une tige de manoeuvre (5) via un arbre flexible (4),
dans laquelle une partie d'extrémité de base (4A) de l'arbre flexible (4) est reliée à un arbre de sortie du moteur (3) et est rotative autour de cet arbre de sortie,
**caractérisée en ce que**
l'arbre de sortie du moteur (3) est incliné d'un angle θ par rapport à une direction de référence verticale (P2) du châssis (2), ladite direction étant verticale par rapport à un plan horizontal alors que le châssis (2) est normalement porté sur le dos dans un plan horizontal par rapport à une partie de châssis verticale du châssis (2) également orientée verticalement, et
dans laquelle l'angle θ est compris entre 5° et 60°.

2. Machine de travail de type sac à dos selon la revendication 1,
dans laquelle la face formée par la rotation de la partie d'extrémité de base (4A) est constante le long d'une position de travail de la tige de manoeuvre (5).

3. Machine de travail de type sac à dos selon l'une quelconque des revendications 1 et 2, dans laquelle la partie d'extrémité de base (4A) est reliée orthogonalement à l'arbre de sortie.

4. Machine de travail de type sac à dos selon l'une quelconque des revendications 1 à 3,
dans laquelle une position reliée entre la partie d'extrémité de base (4A) et l'arbre de sortie est plus haute que le centre de gravité du moteur (3).

5. Machine de travail de type sac à dos selon l'une quelconque des revendications 1 à 3,
dans laquelle une position reliée entre la partie d'extrémité de base (4A) et l'arbre de sortie est proche du travailleur par rapport au centre de gravité.

6. Machine de travail de type sac à dos selon l'une quelconque des revendications 1 à 5,
dans laquelle le moteur (3) est un moteur électrique entraîné par une batterie (30) installée dans le châssis (2).

7. Machine de travail de type sac à dos selon l'une quelconque des revendications 1 à 5,
dans laquelle le moteur (3) est un moteur thermique.

8. Machine de travail de type sac à dos selon la revendication 1, dans laquelle le moteur est un moteur thermique (3E), et
dans laquelle l'arbre de transmission (3A) du moteur thermique (3E) est orienté en direction haut-bas, la partie d'extrémité de base (4A) de l'arbre flexible (4) est rotative autour de l'arbre de transmission (3A) et est reliée à l'arbre de transmission (3A), et le moteur thermique (3E) est monté statiquement au châssis (2).

9. Machine de travail de type sac à dos selon la revendication 8,
dans laquelle l'arbre de transmission (3A) est incliné par rapport à la face de travail.

10. Machine de travail de type sac à dos selon la revendication 8,
dans laquelle la direction des gaz d'échappement du moteur thermique (3E) est configurée obliquement vers le bas.

11. Machine de travail de type sac à dos selon la revendication 10,
dans laquelle l'arbre de transmission (3A) est dirigé vers le côté opposé à la direction des gaz d'échappement.

12. Machine de travail de type sac à dos selon l'une quelconque des revendications 8 à 11,
dans laquelle une face rotative de la partie d'extrémité de base (4A) de l'arbre flexible (4) est disposée au-dessus du moteur thermique (3E).

13. Machine de travail de type sac à dos selon l'une quelconque des revendications 8 à 12,
dans laquelle le moteur thermique (3E) est monté statiquement au châssis (2) via un amortisseur de vibration (7).

14. Machine de travail de type sac à dos selon la revendication 13,
dans laquelle le moteur thermique (3E) est monté sur une pluralité d'amortisseurs de vibration (7) présentant différentes directions d'absorption des vibrations.

15. Machine de travail de type sac à dos selon l'une quelconque des revendications 8 à 14,
dans laquelle un espace est formé entre le moteur thermique (3) et un réservoir de carburant (30T) agencé dans le châssis (2).

16. Machine de travail de type sac à dos selon la revendication 15,
dans laquelle le réservoir de carburant (30T) est agencé dans un espace libre (S) entre le châssis (2) et le moteur thermique (3E) monté sur le châssis (2) dans un état incliné.
